# EUROPÄISCHE PATENTANMELDUNG

(11) **EP 1 369 351 A2**
(43) Veröffentlichungstag der Anmeldung: **10.12.2003**
(21) Anmeldenummer: 03012582.7
(22) Anmeldetag: 03.06.2003
(51) Int. Cl.: B64D 45/00, G08B 15/00

(54) **Verfahren zur Überwachung in einem Personenbeförderungsmittel**

(30) Priorität: 06.06.2002 DE 10225023
(71) Anmelder: Diehl Munitionssysteme GmbH & Co. KG, 90552 Röthenbach (DE)
(72) Erfinder: Schleicher, Ulrich, Dr., 91217 Hersbruck (DE); Drummer, Clemens, 91301 Forchheim (DE)
(74) Vertreter: Diehl Patentabteilung

(57) **Zusammenfassung**

Ein Verfahren zur Überwachung der Passagiere in einem mit Sitzen ausgestatteten Passagierabteil eines Personenbeförderungsmittels, insbesondere Flugzeugs, soll automatisch ablaufen. Hierfür wird an oder bei einigen oder allen Sitzen und/oder an zentralen Stellen des Passagierabteils das Verhalten der Passagiere mittels Sensoren ausgewertet. Bei einer Abweichung der Sensorsignale von üblichen, gespeicherten Werten wird eine Alarmierung und/oder eine Schutzmaßnahme eingeleitet.

## Beschreibung

Die Erfindung betrifft ein Verfahren zur Überwachung eines mit Sitzen versehenen Passagierabteils eines Personenbeförderungsmittels, insbesondere Flugzeugs.

In Personenbeförderungsmitteln, wie Flugzeugen, Schiffen, Schienenfahrzeugen oder Straßenfahrzeugen des öffentlichen Verkehrs oder Taxis, kann es durch die Passagiere zu kritischen, die Reise störenden Verhältnissen kommen. Beispielsweise können Passagiere andere Passagiere bedrohen, Passagiere bedroht werden oder einen Krankheitszustand erleiden.

Das Verhalten bzw. der Zustand der Passagiere ist nach dem Stand der Technik nicht automatisch überwacht. Allenfalls beobachtet Bordpersonal die Passagiere sporadisch. Auf Bedrohungen, die von Passagieren ausgehen oder auf Zustände, die für die Passagiere bedrohlich sind, kann dabei nicht effektiv reagiert werden.

Aufgabe der Erfindung ist es, ein Verfahren vorzuschlagen, bei dem das Verhalten bzw. der Zustand der Passagiere automatisch überwacht wird.

Obige Aufgabe ist durch die Merkmale des Anspruchs 1 gelöst. Mittels der Sensoren wird das Verhalten bzw. der Zustand der Passagiere überwacht. Die von den Sensoren aufgenommenen Signale werden ausgewertet und mit Werten verglichen, die sich aus früheren Reisen ergaben und die in einer entsprechenden Einrichtung gespeichert sind. Solange die Sensorsignale mit den üblichen, gespeicherten Werten im wesentlichen übereinstimmen, erfolgt nichts weiteres. Wenn jedoch die Sensorsignale von üblichen, gespeicherten Werten abweichen, erfolgt eine Alarmierung des Bordpersonals und/oder die Einleitung einer Schutzmaßnahme.

Dadurch ist es möglich, im Personenbeförderungsmittel den Reiseverlauf zu sichern und auf bedrohliche Zustände wirkungsvoll zu reagieren, weil solche durch das beschriebene Verfahren frühzeitig automatisch dem Bordpersonal angezeigt werden.

Vorzugsweise wird von einer entsprechenden Einrichtung aus den Sensorsignalen über eine gewisse Zeitspanne ein Sensorsignalprofil gebildet, das zur Klassifizierung mit einem oder mehreren gespeicherten Werteprofilen verglichen wird. Wenn das jeweils auftretende Sensorsignalprofil von dem gespeicherten Werteprofil oder den gespeicherten Werteprofilen abweicht, wird die Alarmierung und/oder die Schutzmaßnahme eingeleitet. Das beschriebene Überwachungsverfahren reagiert damit nicht auf einzelne Sensorsignale, sondern auf Sensorsignalprofile, die die Sensorsignale einer gewissen Zeitspanne bilden. Entsprechend wird das jeweilige Sensorsignalprofil mit gespeicherten Werteprofilen verglichen. Durch die Erfassung der Sensorsignale bzw. der Sensorsignalprofile und deren Vergleich mit gespeicherten Werten oder Werteprofilen ist es möglich, auffällig werdende Passagiere an ihren Sitzen und/oder im Passagierabteil zu erkennen. Es ist damit möglich, Passagiere, die eine Bedrohung der Reise planen und/oder Passagiere, die von bedrohenden Passagieren beeinflusst werden, zu erkennen.

Durch das beschriebene Verfahren können auch Passagiere erkannt werden, die sich in einem an sich bekannten kritischen Gesundheitszustand befinden, weil solche Passagiere ein Verhalten zeigen, das einen kritischen Zustand, wie beispielsweise Erbrechen oder Kreislaufstörungen, zeigen. Es sind für die Erkennung sonstiger Zustände entsprechende Werteprofile gespeichert. Mit denen wird dann das vom Passagier ausgehende Sensorprofil verglichen und danach eine Alarmierung und/oder Schutzmaßnahme eingeleitet.

Weitere vorteilhafte Ausgestaltungen der Erfindung ergeben sich aus der folgenden Beschreibung von Ausführungsbeispielen.

Im Passagierabteil werden die auftretenden Geräusche kontinuierlich oder diskontinuierlich, beispielsweise mittels Sensoren, wie beispielsweise Mikrofonen, erfasst. Es erfolgt eine Echtzeitauswertung der Geräusche.

Dabei wird der Geräuschpegel und das Frequenzspektrum der Geräusche ausgewertet. Zusätzlich wird ausgewertet, ob sich die Geräusche an einer Stelle des Passagierabteils konzentrieren, oder ob sie gleichmäßig über das Passagierabteil verteilt sind. Darüber hinaus kann ausgewertet werden, wie sich die Geräuschentwicklung über die Zeit verteilt. Die aktuelle Geräuschentwicklung wird danach dann in einem Geräusch-Sensorsignalprofil festgehalten und damit klassifiziert.

Anschließend wird über eine geeignete elektronische Einrichtung ein Vergleich mit aus vorher bekannten, normalen Zuständen entsprechenden Werteprofilen vorgenommen. Weicht das Geräusch-Sensorsignalprofil nicht von den aus ungestörten Reisen gespeicherten Daten ab, ist dies ein Zeichen dafür, dass eine Alarmierung oder eine Schutzmaßnahme überflüssig ist. Weicht jedoch das aktuelle Geräusch-Sensorsignalprofil von dem gespeicherten Werteprofil oder den gespeicherten Werteprofilen ab, dann erfolgt eine Alarmierung und/oder es wird eine Schutzmaßnahme eingeleitet.

Zur Verfeinerung des Vergleichs zwischen "normalen" Sensorsignalprofilen und gespeicherten Werteprofilen kann in Flugzeugen vorgesehen sein, die üblichen, gespeicherten Werte bzw. Werteprofile getrennt nach Business-Class, Economy-Class, Linienflug oder Charterflug vorzusehen, weil dort die üblicherweise, nicht störenden Geräuschverhältnisse unterschiedlich sind. Der Vergleich mit aktuellen Sensorsignalprofilen mit den gespeicherten Werteprofilen erfolgt dann getrennt nach Business-Class, Economy-Class, Linienflug bzw. Charterflug.

Eine zusätzliche oder andere Möglichkeit zur Erkennung von außergewöhnlichen Zuständen besteht darin, die Bewegungen der Passagiere auf ihrem Sitz oder in dem Passagierabteil zu überwachen. Dies kann mit entsprechenden Bewegungsmeldern erfolgen, die an den Passagiersitzen angeordnet sind und/oder die Bewegungen im Passagierabteil erfassen.

Die sich aus den Bewegungen der Passagiere ergebenden Sensorsignalprofile werden nach ihrer Häufigkeit und Intensität erfasst und klassifiziert. Danach wird von einer entsprechenden Einrichtung, wie bei der Geräuscherfassung ermittelt, ob das Bewegungs-Sensorsignalprofil innerhalb einer vorbestimmten Bandbreite liegt oder von dieser abweicht. Bei einer kritischen Abweichung wird die Alarmierungs- und/oder Schutzmaßnahme eingeleitet. Auch hier besteht die Möglichkeit, die Auswertung nach getrennt gespeicherten Werteprofilen für Business-Class, Economy-Class, Linienflug oder Charterflug vorzunehmen.

Eine weitere oder zusätzliche Möglichkeit als Erfassung von Sensorsignalen besteht darin, die Luftfeuchtigkeit an den Sitzen auszuwerten, weil bedrohende oder bedrohte oder krankwerdende Passagiere infolge eines Schweißausbruchs dem Sitz eine erhöhte Feuchtigkeit übermitteln. Die Feuchtigkeitswerte können wir oben beschrieben im Vergleich zu normalen Werten ausgewertet werden, wobei ebenfalls eine Klassifizierung nach üblichen Werten erfolgen kann und die Auswertung getrennt nach Business-Class, Economy-Class, Linienflug oder Charterflug vorgenommen werden kann.

Als andere oder zusätzliche Auswertung ist es möglich, die Körpertemperatur der Passagiere über entsprechende Sensoren an den Sitzen vorzunehmen, weil die Körpertemperatur in Erregungszuständen steigt. Es kann damit ein Körpertemperatur-Sensorsignalprofil ermittelt. Dieses wird mit normalen Werten von einer geeigneten Einrichtung verglichen, was wie bei der oben genannten Messung der Feuchtigkeit unter den dort genannten Kriterien erfolgt.

Wenn die Sensorsignale bzw. das Sensorsignalprofil der oben genannten Kriterien, Geräusch, Bewegung, Feuchtigkeit und Temperatur, im Vergleich zu üblichen, gespeicherten Werten eine ungewöhnliche Abweichung aufweist, kann eine Kamera zugeschaltet werden, die insbesondere das Gesicht des betroffenen Passagiers betrachtet und beispielsweise die Pupillenbewegung erfasst. Das Kamerabild wird dem Bordpersonal zugeleitet. Dieses kann damit eine Beurteilung des Verhaltens oder des Zustandes durchführen und dann entweder versteckt reagieren oder den Passagier direkt ansprechen. Bei einem andere Passagiere oder die Reise nicht bedrohlichen Zustand kann das Bordpersonal den betreffenden Passagier auf seine gesundheitliche Befindlichkeit ansprechen.

Von einem besonders kritischen Zustand werden die Piloten des Flugzeugs vom Bordpersonal benachrichtigt.

Zur Abwehr von Gefahren nach der Erkennung von bedrohlichen Zuständen bestehen verschiedene Möglichkeiten, die einzeln oder in Kombination angewendet werden können:
a) Das Bordpersonal kann eine Gurtsperre auslösen, wonach sich die Sicherheitsgurte von den Passagieren nicht mehr öffnen lassen.
b) In dem Passagierabteil kann der Luftdruck oder der Sauerstoffgehalt erniedrigt werden.
c) Die Cockpittür zwischen dem Passagierabteil und dem Cockpit des Flugzeugs kann verriegelt werden.
d) Der Pilot kann einen Hinweis darauf bekommen, ungewöhnliche Flugmanöver zu fliegen, beispielsweise solche, die mit einer negativen Beschleunigung verbunden sind.
e) Die Bewegungsfreiheit der betroffenen sitzenden Passagiere kann durch mechanische Vorrichtungen am Sitz, beispielsweise durch die genannte Gurtsperre, oder durch Airbags eingeschränkt werden, wodurch das Bordpersonal einen zeitlichen Vorsprung gegenüber bedrohenden Maßnahmen bedrohlicher Passagiere erhält.

## Patentansprüche

1. Verfahren zur Überwachung der Passagiere in einem mit Sitzen ausgestatteten Passagierabteils eines Personenbeförderungsmittels, insbesondere Flugzeugs,
**dadurch gekennzeichnet,**
**dass** an oder bei einigen oder allen Sitzen und/oder an zentralen Stellen des Passagierabteils mittels Sensoren das aktuelle Verhalten der Passagiere ausgewertet wird und dass bei einer Abweichung der Sensorsignale von üblichen, gespeicherten Werten eine Alarmierund/oder eine Schutzmaßnahme eingeleitet wird.

2. Verfahren nach Anspruch 1,
**dadurch gekennzeichnet,**
**dass** aus den Sensorsignalen über eine gewisse Zeitspanne ein Sensorsignalprofil gebildet wird, das zur Klassifizierung mit einem oder mehreren gespeicherten Werteprofilen verglichen wird, und dass dann, wenn das jeweilige Sensorsignalprofil von dem oder den gespeicherten Werteprofil/en abweicht, die Alarmierung und/oder die Schutzmaßnahme eingeleitet wird.

3. Verfahren nach Anspruch 1 oder 2,
**dadurch gekennzeichnet,**
**dass** bekannten kritischen Verhaltensweisen von Passagieren entsprechende Werteprofile vor dem Beginn des Verfahrens gespeichert sind und dass beim Auftreten eines einer kritischen Verhaltensweise entsprechenden Sensorsignalprofils die Alarmierung und/oder die Schutzmaßnahme eingeleitet wird.

4. Verfahren nach einem der vorhergehenden Ansprüche,
**dadurch gekennzeichnet,**
**dass** im Passagierabteil eine Echtzeitüberwachung der Geräusche erfolgt und der Geräuschpegel und/oder das Geräuschfrequenzspektrum und/oder die örtliche Konzentration der Geräusche und/oder der zeitliche Verlauf der Geräuschentwicklung ausgewertet wird.

5. Verfahren nach einem der vorhergehenden Ansprüche,
**dadurch gekennzeichnet,**
**dass** in dem Passagierabteil und/oder an oder bei den Sitzen eine Echtzeitüberwachung der Körper- und/oder der Pupillen-Bewegungen der Passagiere erfolgt, wobei die Schnelligkeit und/oder Häufigkeit und/oder Intensität der Bewegungen ausgewertet wird.

6. Verfahren nach einem der vorhergehenden Ansprüche,
**dadurch gekennzeichnet,**
**dass** an oder bei den Sitzen die jeweils herrschende Feuchtigkeit ausgewertet wird.

7. Verfahren nach einem der vorhergehenden Ansprüche,
**dadurch gekennzeichnet,**
**dass** an oder bei den Sitzen die Körpertemperatur der Passagiere ausgewertet wird.

8. Verfahren nach einem der vorhergehenden Ansprüche,
**dadurch gekennzeichnet,**
**dass** der Vergleich mit üblichen gespeicherten Werten oder Werteprofilen getrennt nach Business-Class, Economy-Class, Linienflug, Charterflug, Kurzstreckenflug, Langstreckenflug erfolgt.

9. Verfahren nach einem der vorhergehenden Ansprüche,
**dadurch gekennzeichnet,**
**dass**, wenn die Auswertung eine Abweichung von üblichen Werten ergibt, zur Kontrolle eine Kamera eingeschaltet wird, die sich im betreffenden Bereich befindliche Passagiere erfasst.

10. Verfahren nach einem der vorhergehenden Ansprüche,
**dadurch gekennzeichnet,**
**dass** die Alarmierung in eine vom Bordpersonal des Personenbeförderungsmittels überwachte Zone erfolgt.

11. Verfahren nach einem der vorhergehenden Ansprüche,
**dadurch gekennzeichnet,**
**dass** als Schutzmaßnahme eine Sperrung eines-Sicherheitsgurts des Sitzes eines auffälligen Passagiers vorgenommen wird.

12. Verfahren nach einem der vorhergehenden Ansprüche,
**dadurch gekennzeichnet,**
**dass** als Schutzmaßnahme eine Absenkung des Luftdrucks und/oder des Sauerstoffgehalts des Passagierabteils vorgenommen wird.

13. Verfahren nach einem der vorhergehenden Ansprüche,
**dadurch gekennzeichnet,**
**dass** als. Schutzmaßnahme eine Verriegehung der Cockpittür des Flugzeugs vorgenommen wird.

14. Verfahren nach einem der vorhergehenden Ansprüche,
**dadurch gekennzeichnet,**
**dass** als Schutzmaßnahme eine Einschränkung der Bewegungsfreiheit eines auffälligen Passagiers, beispielsweise mittels eines Airbags, vorgenommen wird.
